# EUROPÄISCHE PATENTSCHRIFT

(11) **EP 2 416 894 B1**
(45) Veröffentlichungstag und Bekanntmachung des Hinweises auf die Patenterteilung: **08.05.2013**
(21) Anmeldenummer: 10708905.4
(22) Anmeldetag: 16.02.2010
(51) Int. Cl.: B08B 3/12, B29C 33/72, B29D 30/06

(54) **REINIGUNG VON FORMEN ZUR HERSTELLUNG VON REIFENPROFILEN**
CLEANING OF MOULDS FOR THE PRODUCTION OF TIRE PROFILES
NETTOYAGE DES MOULES POUR LA PRODUCTION DES BANDES DE ROULEMENT DE PNEUS

(30) Priorität: 17.02.2009 DE 102009009201; 17.05.2009 DE 102009021697
(43) Veröffentlichungstag der Anmeldung: 15.02.2012
(73) Patentinhaber: FTM Formentechnik, 52152 Simmerath (DE)
(72) Erfinder: VOSSEN, Horst, 52152 Simmerath (DE)
(74) Vertreter: Metz, Siegfried
(86) Internationale Anmeldenummer: PCT/EP2010/000958
(87) Internationale Veröffentlichungsnummer: WO 2010/094454

(56) Entgegenhaltungen:
- EP-A1- 0 240 763
- EP-A1- 1 498 247
- DE-A1-102007 032 147
- DE-C1- 19 543 276
- JP-A- 6 262 630
- US-A- 5 643 367
- US-B1- 6 615 852

## Beschreibung

Die Erfindung betrifft ein Reinigungsverfahren und eine Reinigungsanlage zum Reinigen von Profilformen, die zur Herstellung von Reifenprofilen auf Laufflächen von Fahrzeugreifen dienen und die zum Austritt von Luft und Gasen beim Pressen der Reifenprofile Öffnungen aufweisen, die von beweglichen Ventilen zu öffnen und zu schließen sind. Die Profilformen aus druck- und temperaturbeständigem Material bilden das auf der Lauffläche des Reifens zu erzeugende Reifenprofil negativ ab. Die Profilformen werden in Spüllaugen unter Anwendung von Ultraschall gereinigt.

Zur Erzeugung von Reifenprofilen ist es bekannt, einen Reifenrohling mit einem auf dem Reifenunterbau des Rohlings aufgebrachten Laufstreifen aus Kautschuk in einer Reifenpresse (Heizpresse) gegen eine Profilform zu pressen, die den Rohling ringförmig umgibt. Die Profilform besteht aus mehreren einzelnen Formsegmenten, die zu einem geschlossenen Ring aneinandergesetzt werden. Beim Pressen dringt die Kautschukmasse des Laufstreifens des Reifenrohlings, die aus einem Gemisch aus natürlichem und synthetischen Kautschuk und Zusatzstoffen)* zur Erhöhung von Abriebsfestigkeit und Alterungsbeständigkeit des Reifens besteht, in die Hohlräume der Formsegmente ein. In der Presse wird die profilierte Kautschukmasse bei Temperaturen zwischen 170°C bis 200°C und einem Druck bis zu 22 bar vulkanisiert. Damit die Kautschukmasse beim Verformen in die Hohlräume der *Formsegmente* eindringen kann, ist es erforderlich, in den Hohlräumen vorhandene Luft und gegebenenfalls beim Erhitzen entstehende Gase abzuleiten. Hierzu weisen die Formsegmente auf ihrem Segmentrücken Öffnungen auf, durch die Luft und Gase aus den Hohlräumen in die Umgebung entweichen können. In diese Öffnungen sind Ventile eingesetzt, die sich gegen die Federkraft mechanischer Ventilfedern in den Öffnungen bewegen und die Öffnungen verschließen, sobald die Kautschukmasse die Hohlräume der *Formsegmente* ausgefüllt hat. Nach Vulkanisation der Kautschukmasse werden die *Formsegmente* vom fertigen Reifen abgehoben und der Reifen aus der Presse entfernt. Die Presse kann anschließend erneut mit einem Reifenrohling beladen werden.
)* z.B. Ruß, Zinkoxid, Antioxidentien.

An die Qualität der Reifenprofile werden insbesondere wegen der vom ausgebildeten Profil abhängigen Straßenhaftung des Reifens hohe Anforderungen gestellt. Es kommt darauf an, dass die Hohlräume der Negativprofile der Formen bei der Reifenproduktion stets frei zugänglich sind und keine Materialrückstände enthalten. Zur Pflege der Formen ist es deshalb vorgesehen, die Formen jeweils nach Ablauf empirisch festgelegter Betriebszyklen zu reinigen. Die Profilformsegmente werden hierzu - zweckmäßig gemeinsam mit ihren Halterungen - aus der Presse ausgebaut und in Reinigungsanlagen gesäubert.

Es ist bekannt Profilformen in Spüllösungen unter Anwendung von Ultraschall in nach einander von den Profilformen zu durchlaufenden Reinigungsbädem zu säubern, siehe beispielsweise US 6, 615, 852 B1 für Kunstharzformen in elektrolytischer Reinigungsflüssigkeit.

In JP 06262630 A und EP 1498247 A 1 werden zur Reinigung von Vulkanisationsformen Verfahren beschrieben, bei denen die zu reinigenden Formen nach einem ersten Behandlungsschritt, bei dem die Formen erhitzt und die beim Erhitzen unter Unterdruck entstehenden Dämpfe abgesaugt werden, mit einem Teilchen enthaltenden Pressluftstrahl gesäubert werden. Anschließend werden die Formen gewaschen, wobei die Wäsche durch in die Waschflüssigkeit eingetauchte Ultraschallgeräte unterstützt werden kann.

Bekannt ist auch eine Reinigung von Formsegmenten aus Aluminium mit Trockeneis. Dabei werden Trockeneis-Pellets aus Kohlendioxid CO₂ auf erhitze *Formsegmente* aufgestrahlt, um aus den Hohlräumen der Formsegmente anhaftende und gegebenenfalls verhärtete vulkanisierte Kautschukreste zu entfernen. Schwierigkeiten bereitet dabei das Säubern enger Hohlräume, insbesondere der Öffnungen im Segmentrücken und das Entfernen von Verschmutzungen an Ventilen und Ventilfedern, die bei der Trockeneisreinigung nicht oder nicht genügend zur Schmutzbeseitigung erreicht werden. Eine ungehinderte Beweglichkeit der Ventile ist jedoch eine der wesentlichen Voraussetzungen für eine einwandfreie Ausbildung der Reifenprofile.

Aufgabe der Erfindung ist es somit, eine ausreichende Reinigung der Formen insgesamt einschließlich der Öffnungen und den in den Öffnungen angebrachten Ventilen und Ventilfedern in den Formsegmenten zum ungehinderten Austritt von Luft und Gasen beim Pressen zu erreichen.

Diese Aufgabe wird bei einem Reinigungsverfahren der eingangs genannten Art gemäß der Erfindung nach Patentanspruch 1 dadurch gelöst, dass die Ventile aufweisenden Profilformen nach ihrer Reinigung in einer Hauptreinigungskammer hinsichtlich noch verbliebener Verschmutzungen kontrolliert und die Ventile unter Anwendung von Ultraschall auf ihre Beweglichkeit geprüft und bei Verfestigung gelockert werden, und dass die Profilformen anschließend in einer Nachreinigungskammer nachgereinigt werden. Die Reinigungsanlagen für die *Formsegmente* weisen eine einer Hauptreinigungskammer nachgeschaltete Kontrolleinrichtung zur Kontrolle noch verbliebener Verschmutzungen der Profilformen auf, wobei zur Lockerung von Ventilen der Profilformen und Wiederherstellung ihrer Beweglichkeit in der Kontrolleinrichtung ein Ultraschallgerät eingesetzt ist.

Nachfolgend werden die Erfindung und weitere Ausbildungen der Erfindung anhand eines Ausführungsbeispiels beschrieben. Die Zeichnung zeigt im Einzelnen:
- *Figur 1*: *Ausschnitt eines Formsegments,*
- *Figur 2*: *Reinigungsanlage, Fließschema.*

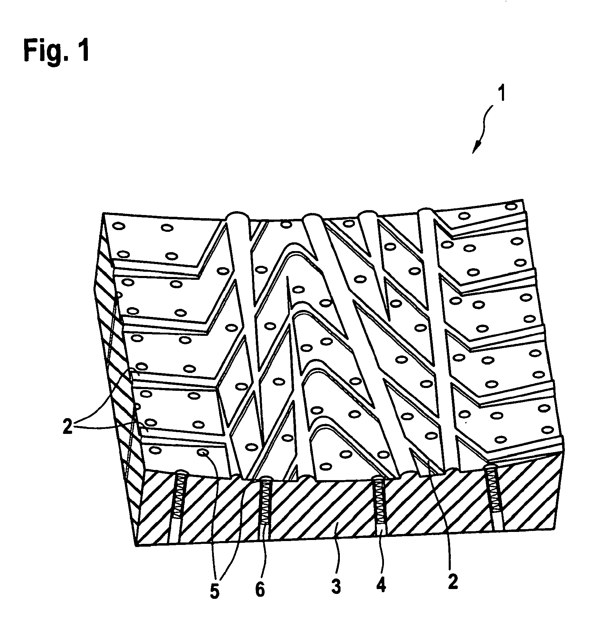

In Figur 1 der Zeichnung ist ein Ausschnitt eines einzelnen Formsegments 1 für eine Profilform zur Erzeugung eines Reifenprofils von Fahrzeugreifen schematisch skizziert. Die Profilform, die aus mehreren *Formsegmenten* 1 zusammengesetzt wird, bildet das Reifenprofil negativ ab, die erhabenen Formteile 2 in der Profilfläche der Formsegmente 1 entsprechen den Vertiefungen des zu erzeugenden Reifenprofils auf der Lauffläche des Reifens. Zur Herstellung des Reifenprofils werden die Fonnsegmente in einer Reifenpresse (Heizpresse) auf einen Reifenrohling auf dessen auf dem Umfang des Reifenrohlings aufgebrachten Laufstreifen aus Kautschuk aufgesetzt. Beim Heizpressen verformt sich die Kautschukmasse des Laufstreifens entsprechend der Profilfläche der *Formsegmente* 1. Damit dabei vorhandene Luft in sich bildenden Hohlräumen zwischen Kautschukmasse und Profilfläche der *Formsegmente* und gegebenenfalls bei Erwärmung entstehende Gase aus den Hohlräumen abströmen können, sind am Formsegment 1 am Segmentrücken 3 Öffnungen 4 vorgesehen, die zur Ableitung von Luft und Gasen einerseits räumlich mit der Profilfläche der Formsegmente in Verbindung stehen und andererseits in die äußere Umgebung der Formsegmente münden, in die Luft und Gase ausströmen können. In den Öffnungen 4 sind Ventile 5 eingesetzt, deren Ventilstift im Ventilgehäuse sich gegen die Federkraft einer mechanischen Ventilfeder 6 bewegt. Der Ventilstift weist einen mittleren Stiftdurchmesser von ca.1 mm auf, Ventilfeder und Ventilgehäuse sind entsprechend dimensioniert. Der äußere Durchmesser des Ventilgehäuses in der Öffnung 4 beträgt im Ausführungsbeispiel ca. 3 mm. Die Ventile 5 sind zu Beginn des Pressvorgangs zum Ausströmen von Luft und Gasen geöffnet, sie schließen sich, wenn die Kautschukmasse die Profilfläche der *Formsegmente* 1 ausgefüllt hat und das Vulkanisieren der Kautschukmasse beginnt.

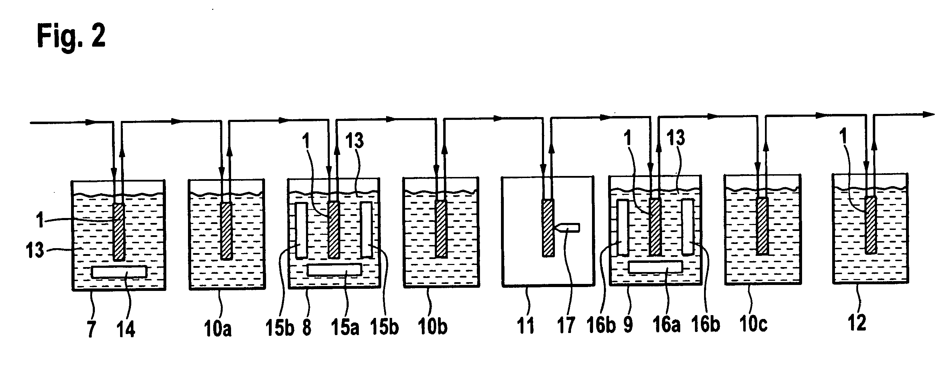

Um die erforderlich Qualität des auszubildenden Reifenprofils zu sichern, werden die Profilformen bzw. die einzelnen *Formsegmente* 1, aus denen sich die Profilform zusammensetzt, regelmäßig nach vorgegebener Einsatzzeit in der Reifenpresse und Ablauf empirisch festgelegter Betriebszyklen generell gesäubert. In Figur 2 der Zeichnung ist schematisch eine Reinigungsanlage zum Reinigen von *Formsegmenten* 1 im Fließbild wiedergegeben.

Die Anlage nach Figur 2 weist für die *Formsegmente* 1 hintereinander geschaltet drei Reinigungskammem 7, 8, 9 auf, eine erste Vorreinigungskammer 7, eine Hauptreinigungskammer 8 und eine Nachreinigungskammer 9, die von jedem der zu reinigenden Formsegmente nacheinander zu durchlaufen sind. Die Durchlaufrichtung der *Formsegmente* durch die Reinigungsanlage ist in Fig.2 auf einer fiktiven Transportbahn durch Pfeile markiert. Im Anschluss an jede Reinigungskammer sind Spülbäder 10a, 10b, 10c vorgesehen. An die Hauptreinigungskammer 8 mit Spülbad 10b schließt sich eine Kontrolleinrichtung 11 an. Ein Endbad 12 beendet die Reinigung der Formsegmente 1.

In den Reinigungskammem werden die Formsegmente aus Aluminium in Spüllaugen 13 getaucht, die im Ausführungsbeispiel erwärmt sind. Die *Formsegmente* werden in den Spüllaugen unter Einwirkung von Ultraschall gereinigt. Zur Erzeugung des Ultraschalls weisen alle Kammern 7, 8, 9 Ultraschallgeräte auf. In den Kammern sind Ultraschallschwinger 14, 15a, 15b, 16a, 16b eingesetzt, die von Ultraschallgeneratoren betrieben werden, die in Fig.2 nicht dargestellt sind. In der Vorreinigungskammer 7 ist der Ultraschallschwinger 14 in der Spüllauge im Bodenbereich der Kammer unterhalb der zur Reinigung in die Spüllauge 13 eingetauchten *Formsegmente* 1 eingesetzt. Die *Formsegmente* 1 werden somit in der Vorreinigungskammer 7 vom Boden der Kammer her beschallt.

Nach Behandlung in der Vorreinigungskammer 7 werden die Formsegmente 1 im Spülbad 10a, das im Ausführungsbeispiel mit erwärmtem Spülwasser gefüllt ist, gespült und von den ersten in der Vorreinigungskammer 7 gelösten Verunreinigungen befreit.

In der nachgeschalteten Hauptreinigungskammer 8 ist einer der Ultraschallschwinger, der Ultraschallschwinger 15a, wieder im Bodenbereich der Hauptreinigungskammer 8 angeordnet. Darüber hinaus befinden sich Ultraschallschwinger 15b im Wandbereich der Hauptreinigungskammer im Ausführungsbeispiel derart, dass die in die Spüllaugen eingetauchten Formsegmente 1 zu ihrer das negative Reifenprofil aufweisenden Fläche hin, also auf ihrer Profilfläche beschallt werden. Auch in der Hauptreinigungskammer 8 werden die *Formsegmente* 1 in erwärmter Spüllauge behandelt, deren Konsistenz und Temperatur im Ausführungsbeispiel der Spüllauge in der Vorreinigungskammer 7 entspricht.

Im Ausführungsbeispiel sind in der Hauptreinigungskammer 8 im Wandbereich zwei Ultraschallschwinger 15b eingesetzt. Es lassen sich so zumindest zwei oder weitere neben einander angeordnete Formsegmente gleichzeitig auf ihrer Profilfläche beschallen. Die Dimensionierung der Reinigungs- und Spülkammern ist entsprechend dem gewünschten Durchsatz von *Formsegmenten* durch die Reinigungsanlage auszulegen.

Nach der Hauptreinigung in der Hauptreinigungskammer 8 werden die Formteile 1 im Spülbad 10b wieder mit erwärmtem Spülwasser gespült und anschließend getrocknet.

Danach folgt in der Kontrolleinrichtung 11 eine Prüfung der erreichten Reinigung. Noch unvollständig gesäuberte Bereiche der *Formsegmente* 1 werden bei Kontrolle mit einem Ultraschallgerät 17 behandelt. Insbesondere betrifft dies die Ventile 5, die einzeln hinsichtlich der Bewegungsfähigkeit von Ventilstiften und Ventilfedern 6 im Ventilgehäuse geprüft, bewegt und entsprechend gelockert werden. Im Ausführungsbeispiel wird hierzu als Ultraschallgerät 17 ein manuell bedienbares Ultraschallgerät mit einem der Ventilabmessung angepassten Ultraschallkopf eingesetzt.

Nach Kontrolle der Formsegmente und Lockerung der Ventilstifte in den Ventile 5 werden die *Formsegmente* in der Nachreinigungskammer 9 erneut in erwärmter Spüllauge unter Einwirkung von Ultraschall gereinigt. Die Nachreinigungskammer 9 weist in gleicher Weise wie die Hauptreinigungskammer 8 sowohl im Boden- als auch im Wandbereich der Kammer Ultraschallschwinger auf. Im Bodenbereich der Nachreinigungskammer 9 sind Ultraschallschwinger 16a, im Wandbereich Ultraschallschwinger 16b eingesetzt.

Die Spüllauge 13 in der Nachreinigungskammer 9 entspricht hinsichtlich ihrer Konsistenz und Temperatur wieder der Konsistenz und Temperatur der Spüllaugen in Vor- und Hauptreinigungskammer.

Nach Behandlung in der Nachreinigungskammer 9 werden die Formsegmente 1 nochmals gespült, zunächst mit Wasser in der Spülkammer 10c, und anschließend im Ausführungsbeispiel im Endbad 12 mit Konservierungsmittel.

Im Ausführungsbeispiel wird die Reinigungsanlage wie folgt betrieben:
- In den Reinigungskammern 7, 8, 9 sind in alkalischer Spüllösung (Spüllauge mit ph 12, 5 (10%) und pH 7,1 (2%)) als Ultraschatigeräte im Bodenbereich 40 kHz Tauchschwinger, im Wandbereich 30 kHz Tauchschwinger eingesetzt. Die Spüllaugentemperatur beträgt ca. 80°C. Die Tauchschwinger werden ca. 15 min. betrieben. Die Ultraschallschwingung ist so zu wählen, dass Kavitation vermieden wird.
- In den Spülbädern 10 (10a, 10b, 10c) beträgt die Spülwassertemperatur ca.40°C.
- In der Kontrolleinrichtung 11 wird ein manuell bedienbares Ultraschallgerät 17 mit einem dem Ventilstift angepassten Ultraschallkopf mit 50/60 kHz eingesetzt.
- Die gereinigten Profilformen lassen sich im Endbad 12 mit einem Spülmittel mit pH 9.1 (0, 25%) bei Raumtemperatur (RT) konservieren.

### Bezugszeichenliste

| | |
|---|---|
| *Ausschnitt eines Formsegmentes* | *1* |
| *Formteile* | *2* |
| *Segmentrücken* | *3* |
| *Öffnung* | *4* |
| *Ventil* | *5* |
| *Ventilfeder* | *6* |
| *Vorreinigungskammer* | *7* |
| *Hauptreinigungskammer* | *8* |
| *Nachreinigungskammer* | *9* |
| *Spülbad* | *10a, 10b, 10c* |
| *Kontrolleinrichtung* | *11* |
| *Endbad* | *12* |
| *Spüllauge* | *13* |
| *Ultraschallschwinger* | *14, 15a, 15b, 16a, 16b* |
| *manuell bedienbares Ultraschallgerät* | *17* |

## Patentansprüche

1. Reinigungsverfahren zum Reinigen von Profilformen, die zur Herstellung von Reifenprofilen auf Laufflächen von Fahrzeugreifen dienen und zum Austritt von Luft und Gasen beim Pressen der Reifenprofile Öffnungen (4) aufweisen, die von beweglichen Ventilen (5) zu öffnen und zu schließen sind, bei dem die Profilformen in Spüllaugen unter Anwendung von Ultraschall gereinigt werden,
**dadurch gekennzeichnet,**
**dass** die Ventile (5) aufweisenden Profilformen nach ihrer Reinigung in einer Hauptreinigungskammer (8) hinsichtlich noch verbliebener Verschmutzungen kontrolliert und die Ventile unter Anwendung von Ultraschall hinsichtlich ihrer Beweglichkeit geprüft und gelockert werden, und dass die Profilformen in einer Nachreinigungskammer (9) nachgereinigt werden.

2. Reinigungsverfahren nach Anspruch 1, **dadurch gekennzeichnet, dass** die Profilformen vor ihrer Reinigung in der Hauptreinigungskammer eine Vorreinigungskammer durchlaufen.

3. Reinigungsverfahren nach Anspruch 2, **dadurch gekennzeichnet, dass** die Profilformen jeweils nach Durchlauf sowohl der Vorreinigungs- als auch der Hauptreinigungskammer und der Nachreinigungskammer in einem Spülbad gespült werden.

4. Reinigungsverfahren nach Anspruch 1, 2 oder 3, **dadurch gekennzeichnet, dass** die Spüllaugen erwärmbar sind.

5. Reinigungsanlage zum Reinigen von Profilformen, die zur Herstellung von Reifenprofilen auf Laufflächen von Fahrzeugreifen dienen und zum Austritt von Luft und Gasen beim Pressen der Reifenprofile Öffnungen aufweisen, die von beweglichen Ventilen zu öffnen und zu schließen sind, mit einer Hauptreinigungskammer (8),
die zum Reinigen der Profilformen in einer Spüllauge (13) in der Spüllauge eingesetzte Ultraschall erzeugende Geräte (15a, 15b) aufweist, **dadurch**
**gekennzeichnet, dass** für in der Hauptreinigungskammer (8) gereinigte Profilformen eine der Hauptreinigungskammer nachgeschaltete Kontrolleinrichtung (11) zur Kontrolle noch verbliebener Verschmutzungen der Profilformen vorgesehen ist, und dass in der Kontrolleinrichtung (11) zur Kontrolle der Beweglichkeit der Ventile und zu ihrer Lockerung ein Ultraschallgerät (17) eingesetzt ist, und dass der Kontrolleinrichtung (11) zur Nachreinigung der Profilformen eine Nachreinigungskammer (9) nachgeschaltet ist..

6. Reinigungsanlage nach Anspruch 5 , **dadurch gekennzeichnet, dass** der Hauptreinigungskammer (8) eine Vorreinigungskammer (7) vorgeschaltet ist.

7. Reinigungsanlage nach Ansprüche 5 oder 6, **dadurch gekennzeichnet, dass** jeder Reinigungskammer (7, 8, 9) für zuvor in der Reinigungskammer gereinigte Profilformen ein Spülbad (10a, 10b, 10c) nachgeordnet ist.

8. Reinigungsanlage nach einem der Ansprüche 5 bis 7 **dadurch gekennzeichnet, dass** die Reinigungskammem (7, 8, 9) mit erwärmbaren Spüllaugen (13) gefüllt sind, in die die Profilformen zum Reinigen eintauchen, und dass in den Reinigungskammern (7, 8, 9) Ultraschallschwinger (14, 15a, 15b, 16a, 16b) installiert sind.

## Claims

1. A cleaning method for the cleaning of tread moulds which serve for the production of tyre treads on caps of vehicle tyres and have openings (4) for the discharge of air and gases on pressing of the tyre treads, which openings are to be opened and closed by movable valves (5), in which the tread moulds are cleaned in washing liquors with the application of ultrasound,
**characterized in that**
the tread moulds, having valves (5), are checked, after their cleaning in a main cleaning chamber (8), with regard to still remaining contamination, and the valves are tested with regard to their mobility and loosened under the utilization the generation of ultrasound, and that the tread moulds are given a secondary cleaning in a secondary cleaning chamber (9).

2. The cleaning method according to Claim 1, **characterized in that** before their cleaning in the main cleaning chamber (8), the tread moulds run through a pre-cleaning chamber (7).

3. The cleaning method according to Claim 2, **characterized in that** after running through both the pre-cleaning and also the main cleaning chamber (7, 8) and the secondary cleaning chamber (9), the tread moulds are washed in a washing bath (10a, 10b, 10c).

4. The cleaning method according to Claim 1, 2 or 3, **characterized in that** washing liquors are able to be heated.

5. A cleaning facility for the cleaning of tread moulds, which serve for the production of tyre treads on caps of vehicle tyres and have openings (4) for the discharge of air and gases on pressing of the tyre treads, which openings are to be opened and closed by movable valves (5), with a main cleaning chamber (8), which has ultrasound-generating equipment (15a, 15b) used in the washing liquor for the cleaning of the tread moulds in a washing liquor (13),
**characterized in that**
for tread moulds cleaned in the main cleaning chamber (8), a monitoring arrangement (11), downstream of the main cleaning chamber, is provided for monitoring still remaining contamination of the tread moulds, and that in the monitoring arrangement (11) an ultrasonic device (17) is used for monitoring the mobility of the valves and for their loosening, and that downstream of the monitoring arrangement (11) a secondary cleaning chamber (9) is arranged for the secondary cleaning of the tread moulds.

6. The cleaning facility according to Claim 5, **characterized in that** a pre-cleaning chamber (7) is arranged upstream of the main cleaning chamber (8).

7. The cleaning facility according to one of Claims 5 or 6, **characterized in that** a washing bath (10a, 10b, 10c) is arranged after each cleaning chamber (7, 8, 9) for mould treads which have been previously cleaned in the cleaning chamber.

8. The cleaning facility according to one of Claims 5 to 7, **characterized in that** the cleaning chambers (7, 8, 9) are filled with heatable washing liquors (13), into which the tread moulds are immersed for cleaning, and that ultrasonic oscillators (14, 15a, 15b, 16a, 16b) are installed in the cleaning chambers (7, 8, 9).

## Revendications

1. Procédé de nettoyage pour nettoyer des moules profilés qui servent à la fabrication de sculptures de pneus sur les surfaces de la bande de roulement de pneus de véhicules et présentent des ouvertures (4) pour l'extraction de l'air et des gaz lors du moulage des sculptures de pneus qui peuvent être ouvertes et fermées par des soupapes (5) mobiles, lors duquel les moules de sculptures sont nettoyés dans des lessives de lavage en utilisant des ultrasons
**caractérisé en ce que**
les moules profilés présentant des soupapes (5) sont contrôlés après leur nettoyage dans une chambre principale de nettoyage (8) en ce qui concerne les saletés encore restantes et les soupapes sont vérifiées et desserrées concernant leur mobilité en utilisant des ultrasons et **en ce que** les moules profilés sont renettoyés dans une chambre de renettoyage (9).

2. Procédé de nettoyage selon la revendication 1 **caractérisé en ce que** les moules profilés passent dans une chambre de prénettoyage (7) avant leur nettoyage dans la chambre de nettoyage principale (8).

3. Procédé de nettoyage selon la revendication 2 **caractérisé en ce que** les moules profilés sont lavés dans un bain de lavage (10a, 10b, 10c) après passage tant dans la chambre de prénettoyage que dans la chambre de nettoyage principale (7, 8) et la chambre de renettoyage (9).

4. Procédé de nettoyage selon la revendication 1, 2 ou 3 **caractérisé en ce que** les lessives de lavage sont chauffables.

5. Installation de nettoyage pour nettoyer des moules profilés qui servent à la fabrication de sculptures de pneus sur les surfaces de la bande de roulement de pneus de véhicules et présentent des ouvertures (4) pour l'extraction de l'air et des gaz lors du moulage des sculptures de pneus qui peuvent être ouvertes et fermées par des soupapes (5) mobiles, avec une chambre de nettoyage principale (8) qui présente des appareils (15a, 15b) générant des ultrasons utilisés dans la lessive de lavage pour nettoyer les moules profilés dans une lessive de lavage (13) **caractérisée en ce que** pour les moules profilés nettoyés dans la chambre de nettoyage principale (8) est prévu un dispositif de contrôle (11) raccordé à la chambre de nettoyage principale pour contrôler les saletés encore restantes des moules profilés et **en ce que** dans le dispositif de contrôle (11) on utilise un appareil à ultrasons (17) pour contrôler la mobilité des soupapes et pour les desserrer et **en ce qu'**une chambre de renettoyage (9) est raccordée au dispositif de contrôle (11) pour renettoyer les moules profilés.

6. Installation de nettoyage selon la revendication 5 **caractérisée en ce qu'**une chambre de prénettoyage (7) est raccordée préalablement à la chambre de nettoyage principale (8).

7. Installation de nettoyage selon une quelconque des revendications 5 ou 6 **caractérisé en ce qu'**après chaque chambre de nettoyage (7, 8, 9) est disposé un bain de lavage (10a, 10b, 10c) pour les moules profilés préalablement nettoyés dans la chambre de nettoyage.

8. Installation de nettoyage selon une quelconque des revendications 5 à 7 **caractérisée en ce que** les chambres de nettoyage (7, 8, 9) sont remplies de lessives de lavage (13) chauffables dans lesquelles sont plongés les moules profilés pour nettoyage et **en ce que** des générateurs d'ultrasons (14, 15a, 15b, 16a, 16b) sont installés dans les chambres de nettoyage (7, 8, 9).
